# EUROPEAN PATENT APPLICATION

(11) **EP 3 454 266 A1**
(43) Date of publication of application: **13.03.2019**
(21) Application number: 17425090.2
(22) Date of filing: 11.09.2017
(51) Int. Cl.: G06Q 10/06, H04L 29/08, H04W 4/029

(54) **METHOD AND SYSTEM FOR THE CERTIFICATION OF THE IDENTITY AND MOVING POSITION OF INDIVIDUALS, GOODS AND PROCESSES IN SPACE AND TIME THROUGH ELECTRONIC DEVICES**

(71) Applicant: Legalock Srl, 95127 Catania (IT)
(72) Inventor: ZITO, Daniele, 96100 Fanusa SR (IT); MORANA, Giovanni, 96100 Siracusa SR (IT); PUGLISI, Carmelo Gabriele, 95020 Aci Bonaccorsi CT (IT)
(74) Representative: Randazzo, Luigi

(57) **Abstract**

A method and system for electronic devices (smartphone, notebook or computer) arranged for certification of the identity and position of indivudals, goods and processes tracking space-time position through an algorithm based on a synergistic combination of biometric and GPS data and subsequent certification.

This algorithm integrate and validate data provided by various device sensors (biometric sensors, GPS, wireless connections) through an independent web service with a well-defined communication protocol.

The user have to create his profile through web service, after that, he will logs into the service and he will ask for a certitification, defining the structure of the bayesian network and consequently the sequence and classes of identifying elements required for the recognition of the identity: the greater the number of classes involved and the number of elements for the same class, the greater the indentification process reliability.

Once the network structure is defined, the system will sequentially and interactively check all the identifying elements: the Bayesian network, hosted in an external (external server) device, will calculate the joint probability and generate an event record.

At the same time, the system will establish the location of the process combining satellite coordinates, presence of specific wi-fi networks and cellphone clustering (GSM, GPRS, EDGE, Umts, Gprs, Hsdpa, Hsupa, HSPA+, LTE, etc).

The result certification, stored in a backup that guarantees the integrity of the saved data, will be sent as a summary document to the user.

This system can be used in all the processes of authentication, authorization, and accounting and the certification/event record obtained will be helpful in employment field, transport, banking, security, agricultural industry and in any other case where it can be useful to demonstrate your position in a particular place and at a particular time.

## Description

### DISCLOSURE OF INVENTION

One of the main problem today is to certify that a person or some goods or a process (linked to that person) is or has been in a particular place at a particular time.

Modern electronic devices (e.g. smartphones) and wireless communication technologies already offer various solutions to provide details of your identity and your space-time position: however, this information is not always accurate and reliable because of the nature of the devices (their poor quality) and the easiness for a user in bad faith to manipulate such information.

On the basis of the foregoing considerations, the information regardig the identity of a person (or object or process) and its relative position in space and time obtained by an electronic device can be considered reliable only if it is generated through a process that ensures accuracy and integrity.

For this purpose, it is necessary to integrate and validate data provided by various device sensors (biometric sensors, GPS, wireless connections) through an independent web service with a well-defined communication protocol.

Using the proposed solution, every user is able to identify himself (or identify a specific object or demonstrate to be involved in a particular process) irrefutably and to get a certificate attesting his identity and his space-time coordinates, for the purpose of legal validity enforceable against third parties. This kind of certificate obtained can be afterwards used by judicial authorities, public and private bodies, companies and private citizens to provide or access services in remote.

### PROCESS

This solution consists of **3 separated steps:**

### I. User Registration (Enable Certification Request)

### II. Request for identity and space-time authentication

### III. Release required certificate

The identification process is improved by a bayesian network.

This system permits to model a decision support mechanism (certification or not) in uncertain situations, i.e. when there is not a deterministic model of the process and elements used for identification (identifying elements) do not provide absolute certainty, but mere probability.

Identifying elements, which are the basis of the certification process, are nodes of the Bayesian network and represent random variables whose probability tables depend heavily on the macro-class membership and network structure.

The macro classes are three and they are characterized by several marginal probability values:
- Memory: PIN, password, personal information (mother's name, first girlfriend, first pet, favorite movie or book);
- Biometrics: face recognition, fingerprint, voice recognition, iris scan etc;
- Ownership: e-mail, phone number, smartphone (IMEI), IBAN, credit card, identity card, driver's license, passport etc.

The network structure, which represents the identification process and the layout of the strings between the nodes (and, consequently, probabilistic links between the identifying elements), influences the type of probability table (marginal or conditioned) and the values inside.

At the registration time **(STEP** I - **User Registration** - **Drawing No.1** **attached with algorithm depicting the procedure),** made by a dedicated web service, the user will upload a copy of his photo ID, his own ID, personal data and some identifying elements (at least 2 for each class, not less than 8 in total). User will be required to express his consent to the Company providing the service, accepting expressly the conditions and policy of use (point and click) and must also express consent to personal data processing, which will save it into a specific database with a specific profile.

After being registered, the user will be required to certify **(STEP II** - **Certificate of identity and space-time position** - **description drawing no.1 attached with algorithm depicting the procedure)** his identity and his space-time position.

Through a dedicated web service, the user can choose the degree of reliability of the certificate (low, medium, high) on the basis of the service that he wants to obtain. This choice will affect the type of identification process (the network structure), it will define the structure of the bayesian network and consequently the sequence and classes of identifying elements required for the recognition of the identity.

Each identification process can refer to different macro-classes and/or use different identifying elements within each class: the greater the number of classes involved and the number of elements for the same class, the lesser the possibilities to use a false identity. Using eight identifying elements belonging to each of the macro-classes (the minimum condition required during the registration step) allows the creation of Bayesian networks capable of securing the identity of the user beyond reasonable doubt. Once the network structure is defined, the system will sequentially and interactively check all the identifying elements: the Bayesian network, hosted in an external (external server) device, will calculate the joint probability and generate a positive(approved certification) or a negative response (refused certification).

At the same time, the system will establish the location of the process combining satellite coordinates, presence of specific wi-fi networks and cellphone clustering (GSM, GPRS, EDGE, Umts, Gprs, Hsdpa, Hsupa, HSPA +, LTE, etc). Using mixed and independent solutions will allow user to certify his position beyond reasonable doubt.

All the information acquisition process (with relative message exchange) will be done in a single work session, ensuring timely continuity and consequently a clear positioning of the process over time.

All the algorithms involved in the identity and space-time authentication step will be open-source in order to ensure the reliability of the involved software subjects and the integrity of the data exchanged.

**STEP III (description drawing no.1 attached with algorithm depicting the procedure)** Once a response is obtained by the Bayesian network, the system will generate a transaction with the result certification. This transaction will firstly be stored in a backup that guarantees the integrity of the saved information (in terms of completeness and inalterability in time - Blockchain, normed Storage, ROM Disks) and subsequently its content will be used to create a summary document that certifies the authenticity and reliability of the subjects involved throughout the certification process and, as already mentioned, the integrity of the saved data. This document will always be available (Accessibility), it will be enforceable against third parties and it will be exhibited as a legal proof in case of disputes.

The generated document (in PDF or other format) will also be sent by using PEC (Certified EMail). It gives a strong legal validity to the certification obtained thanks to the presence of a set of data that allows, in one hand, to trace back to the user so that he can not repudiate it and, on the other hand, to provide precise time indications. However, the use of this system/method does not depend on having a PEC Address (Certified Email Address): it means that even someone without a PEC Address will be able to use it. Using a PEC Address, in addition to ensuring the transmission of data, will also serve to confer greater security and reliability on the procedure ensuring timely marking.

The whole process needs the following components:
- Device (smartphone, notebook or computer);
- Biometric detection sensors;
- GPS sensors;
- Wireless connection;
- Camera;
- Server Web hosting the bayesian network;.
- Database to storage data;
- Blockchain-based Database or storage for saving all transactions/certifications;
- pdf/html/json creator for certification presentation layer;
- Server mail or interface to sending certified email

### BRIEF DESCRIPTION OF DRAWINGS (FIG. N. 1)

**(1).SIGN_UP:** The user, through the system interface (System GTW) sends the registration request and all the needed data (username, password, e-mail).
**(2).Create User Profile:** The system interface receives the data and create an user profile on a private database (User Profile Storage).
**(3).Confirmation:** The user receives the confirmation about the registration process (or about its failure).
**(4).Upload ID Elements:** The user, through the system interface, sends the ID Element.
**(5).Store ID Element:** The system interface receives the data and save them in the related user profile.
**(6).Confirmation:** The user receives the confirmation about the uploading process (or about its failure).
   Operations (4) (5) e (6) are executed for every required ID Elements.
**(7).Login:** The user logs into the system using the system interface.
**(8).Ask for Certification:** The user asks for a certification about his identity and his time/space position.
**(9).Open Session:** The Bayesian Network Engine (BNE) receives the certification request.
**(10). Start transaction:** The BNE starts the verification process creating a transaction on a data storage able to guarantee data integrity (e.g., Blockchain or legal storage).
**(11). Confirmation:** The BNE receives the confirmation about the session (or about its failure).
**(12). Prepare the list:** The BNE selects which ID elements the user has to provide to certify his identity. Those are selected among the ID Elements stored in the user profile and basing on the desired degree of security.
**(13). Send the list of required ID Elements:** The BNE sends the list of ID Elements to the user.
**(14). Provide the ID Element:** The user sends the required ID Element. It could be a picture for face recognition, an audio registration for voice recognition, a Boolean value for the fingerprint check, a PIN, a password or any other info that could help to verify the user identity.
**(15). Check the ID Element:** The BNE verifies the ID Element with the one stored in the user profile.
**(16). Confirmation:** The BNE receives the confirmation about the match of the values (or about their mismatch).
   Operations (14) (15) e (16) are executed for every required ID .
**(17). Provide Position and Time references:** The user (using the app in his device) sends in background all the info related to his position (GPS, info about the connected cellular base radio stations and about the SSIDs of the wi-fi networks identified)
**(18). Evaluate the Inputs:** The BNE validates (or not) the user identity basing on the value of the conditional probability over the set of all the involved variables (i.e., the ID Elements).
**(19). Save the result and close the transaction:** The BNE stores the result about the evaluation process in the trusted storage (Blockchain or legal storage).
**(20). Confirmation:** The BNE receives the confirmation about the executed transaction (or about its failure).
**(21). Create and send the certificate:** The BNE creates a certificate containing all data collected and send it (also using a certified legal email) to the user.
**(22). Notification:** The user receives the certificate that confirm (or not) his identity and his space/time position.

### TECHNICAL FIELD

The certification/event record obtained will be helpful in employment fields, with judicial authorities, with public and private Companies, in any other case where it can be useful to demonstrate your position in a specific place at a particular time.

Some of the application fields are: **employment, medicine and health, transport, banking, security, hotel industry, agricultural industry, fake identity and social media.**
- Employment field: using this system in place of employee identification badges, each employee can directly and unambiguously be registered in a specific service, log-in and obtain a space-time certification attesting his attendance on work, reducing frauds linked to the use of personal badge by other people in bad faith;
- employees who need to certify their position or the time and place of their performance (eg for certifying a patient's home visit or certifying a report at a specific place and time);
- couriers (private and public mail express) that have to certify their delivery -e.g.. to prove the presence of the courier at a particular time in a particular place in the absence of the consignee, in order to prevent disputes in that sense;
- banking (KYC - Know Your Customer):
- security in online-trading operations (e.g. requiring space-time identification and certification through this service for each transaction with large amounts of money);
- opening online accounts: each user can open a remote account through our system by guaranteeing his identity and his space-time position;
- security in online-trading operations in order to prevent frauds or other offences, ensuring traceability and identification of the operators;
- security of credit card transactions, everytime the service in question could complement (or replace) signature and security code. Just consider the convenience of the signature replacement in case of credit card transactions: it would give greater assurance about the identity of the owner of a credit/debit card (Banks could save a lot in terms of time, money and security reducing fraud's risk);
- applying the device to ATMs in order to enhance the security of operations, particularly with regard to the identification and authentication of the user;
- using this system for the protection of agricultural industry against counterfeiting is also possible: user will be able to demonstrate, through the system, the origin and ownership of the producer of a particular product (through certification of the producer in space and time);
- fast Airport check-in, booking and check-in trains and ships : it can ensure potential time savings and further biometric security certified through a check-in directly made by the user. He can easily forward the email received by our service in real time to Airline Companies. Moreover, in terms of additional security for the companies to prevent terrorism, Airlines Companies can protect themselves proving to have bookings with biometric certificate of users with legal validity, as an additional filtering tool for Public Safety. Indeed, it is hard to imagine a falsification of the those kind of documents: while it is still possible falsifying identity documents, it is impossible the falsification or alteration of biometric data;
- check-in hotel "fast way" (e.g..: check-in hotel for the night): it can ensure speeding up operations. When hosts arrive in hotels at night time, check-in operations are not always available: through our system, hosts can make at home their own hotel check-in certifying their identity, sending the certificate obtained by email directly to the hotel. By virtue of matching users to an ID document, the service will be made in compliance with local regulations regarding hotels registration;
- in the Social field, this system could also be applied to certify position and ownership of a social profile, particularly for celebrities who are often victims of the creation of "fake" accounts.

It is thus generally useful for the identification of people who, flagging itself, will have access, in every part of the world, to their own personal identification and geo-localization, simply accessing the device, obtaining a valid certification/event record of self-positions.

### INDUSTRIAL APPLICABILITY

At this stage, the current technologies that the system would use are following:
- Data transmission through mobile devices (GSM, GPRS, EDGE, UMTS, Gprs, HSDPA, HSUPA, HSPA +, LTE, etc.) and through Wi-Fi networks;
- Identification of location using GPS sensors of mobile devices, through information about the connected cellular base radio stations and through the SSIDs of the wi-fi networks identified;
- Biometric identification on mobile devices through fingerprint recognition, face recognition technology (individual recognition), voice recognition and iris recognition;
- Validation of inputs for certification will take place through a Bayesian network whose probability tables, time-varying, will be defined case by case;
- Each certificate will be saved on a backup that guarantees the integrity of saved information (in terms of completeness and inalterability in time - Blockchain, normed Storage, ROM Disks);
- The compilation of the certification document and the PDF creation will take place through an open source app that will guarantee reliability of process and integrity of saved data;
- The service will send and receive documents usign email certified systems(PEC);
- The identification mechanism proposed by Legalock can be used in all the processes of authentication, authorization, and accounting.

### BACKGROUND

We strongly believe, after extensive researches, that a service that combines tracking position in space and time with biometric recognition and gps data and provides subsequent certification, through the algorithm above mentioned, does not exist at the moment. Therefore, this system is highly innovative and it could be a game-changer and an innovative strength point for any type of certification in any professional field and in everyday life, guaranteeing great utility (practicality) and operation's speed unmatched so far.

## Claims

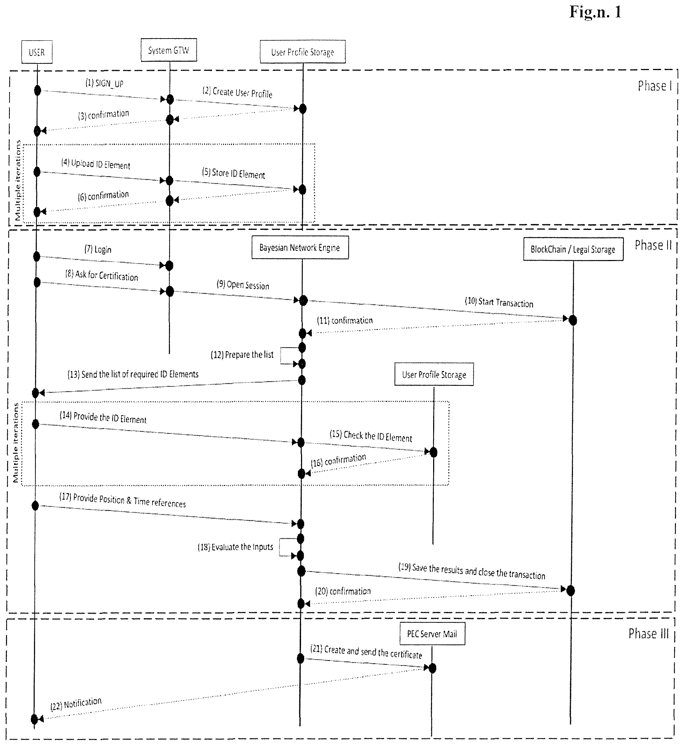

1. Method for the certification of the identity and moving position of individuals, goods and processes in space and time for electronic devices (smartphone, computer, notebook) through biometric detection sensors, gps sensors, wireless connection and camera **characterized by** three separated step (User registration, Request for identity and space-time authentication and Release certification - fig.1) and **characterized in that** it is able, made by a dedicated web service, to integrate and validate identifying elements, gps and wi-fi data provided through sensors during a single work session. After a validation step through the bayesian network, the system will sequentially create and send to the user an event record/certificate with the collected data about identity and space-time position (step 3 - fig.1);

2. Method for the certification of the identity and the space-time position according to claim 1 with an identification process **characterized by** three macro-classes: memory (pin, password and personal information); biometrics (face ricognition, fingerprint, voice ricognition and iride scan); ownership (e-mail, phone number, smartphone IMEI, IBAN, credit card, identity card, driver's license, passport etc); these macroclasses contain several identifying elements, which are the basis of the certification process and the nodes of the Bayesian network, as random variables whose probability tables depend heavily on the macro-class membership and the network structure;

3. Method for the certification of the identity and the space-time position according to claim n.2 **characterized in that** the network structure, which represents the identification process and the layout of the strings between the nodes (and, consequently, probabilistic links between the identifying elements), influences the type of probability table (marginal or conditioned) and the values inside;

4. Method for the certification of the identity and the space-time position according to the previous claims **characterized in that** the position identification process take place through combination of gps sensors on mobile electronic device, through information about the connected cellular base radio stations and through the SSIDs of the wi-fi networks identified;

5. Method for the certification of the identity and the space-time position according to the previous claims **characterized in that** it is able to ask and to verify the identifying elements, through the Bayesian network hosted into a external device (server web) that will calculate the degree of correspondence and will generate a record (positive or negative);

6. Method for the certification of the identity and the space-time position according to the previous claims for use on banking ATM;

7. Method for the certification of the identity and the space-time position according to the previous claims for use in place of employee identification badges;

8. System for the certification of the identity and moving position of individuals, goods and processes in space and time comprising:
- electronic devices (smartphone, computer, notebook) with biometric detection sensors, gps sensors, wireless connection and camera;
- Server Web hosting the bayesian network;.
- system interface (System GTW) able to receive and store user's identifying elements with a user profile on a private database (User Profile Storage) (STEP I - User Registration - Fig. 1);
- Database to storage data;
- Blockchain-based Database or storage for saving all transactions/certifications;
- pdf/html/json creator for certification presentation layer;
- Server mail or interface to sending certified email;

9. System for the certification of the identity and moving position according to the claim n.8 **characterized by** three separated step (User registration, Request for identity and space-time authentication and Release certification - fig.1) and **characterized in that** it is able, made by a dedicated web service, to integrate and validate identifying elements, gps and wi-fi data provided through sensors during a single work session. After a validation step through the bayesian network, the system will sequentially create and send to the user an event record/certificate with the collected data about identity and space-time position (step 3 - fig.1);

10. System for the certification of the identity and moving position according to the claim n.8-9 **characterized by** a Bayesian Network Engine (BNE) able to:
- open a verification session for a transaction on a data storage able to guarantee data integrity (Blockchain-based Database or storage);
- receive the confirmation about the session;
- select and ask which ID elements the user has to provide to certify his identity;
- verify the identifying elements sent by the user and the the degree of correspondence with the stored values into the user profile;
- get in background all the info related to user position (GPS, info about the connected cellular base radio stations and about the SSIDs of the wi-fi networks identified);
- combine and validate data provided and user identity through the bayesian network;

11. System for the certification of the identity and moving position according to the claim n. 10 **characterized by** a Bayesian Network Engine (BNE) able to store the result in the trusted storage (Blockchain or legal storage), able to receive confirmation about the match of the values (or about their mismatch) and able to generate a certificate containing collected data and send it (also using a certified legal email) to the user;

12. System for the certification of the identity and moving position according to the claim n. 8-9-10-11 **characterized in that** the position identification process process take place through combination of gps sensors on mobile electronic device, through information about the connected cellular base radio stations, satellite coordinates and cellphone clustering (GSM, GPRS, EDGE, Umts, Gprs, Hsdpa, Hsupa, HSPA +, LTE, etc) and through the SSIDs of the wi-fi networks identified;

13. System for the certification of the identity and moving position according to the claim n. n. 8-9-10-11-12 able to store the transation in the trusted storage (Blockchain or legal storage or Rom Disks), creating an event recod/certificate with all data collected and sending it to the user (also by email).
